Europäisches Patentamt

European Patent Office

Office européen des brevets

(11) Veröffentlichungsnummer: **0 319 773**
**A2**

## (12) EUROPÄISCHE PATENTANMELDUNG

(21) Anmeldenummer: 88119463.3

(22) Anmeldetag: 23.11.88

(51) Int. Cl.⁴: **B29C 59/02**

(30) Priorität: 08.12.87 DE 3741588

(43) Veröffentlichungstag der Anmeldung:
14.06.89 Patentblatt 89/24

(84) Benannte Vertragsstaaten:
**AT BE CH DE ES FR GB GR IT LI LU NL SE**

(71) Anmelder: Louda, Günther
Dr.-Kurt-Huber-Strasse 10
D-8022 Grünwald(DE)

(72) Erfinder: Louda, Günther
Dr.-Kurt-Huber-Strasse 10
D-8022 Grünwald(DE)

(74) Vertreter: Lamprecht, Helmut, Dipl.-Ing.
Corneliusstrasse 42
D-8000 München 5(DE)

(54) **Verfahren zum Prägen von laminierten Werkstücken.**

(57) Beim Prägen von Werkstücken in Form von mit Hüllfolien laminierten, blatt- oder kartenförmigen Inletts, insbesondere Ausweisen oder dergleichen Datenträgern, in einer beheizten Prägepresse (36), werden die Werkstücke schrittweise zunächst einer Heizstation (24) zugeführt und auf eine über der Prägetemperatur liegende Temperatur erwärmt, anschließend in eine Prägestation (36) mit unter der Prägetemperatur gehaltenen Prägewerkzeugen geprägt und gekühlt und schließlich in einer Kühlstation (44) abgekühlt.

EP 0 319 773 A2

## Verfahren zum Prägen von laminierten Werkstücken.

Die Erfindung betrifft ein Verfahren zum Prägen von Werkstücken in Form von mit Hüllfolien laminierten, blatt- oder kartenförmigen Inletts, insbesondere Ausweisen oder dergleichen Datenträgern, in einer beheizten Prägepresse, bei welchem die Werkstücke erwärmt, geprägt und anschließend gekühlt werden, sowie eine Vorrichtung zur Durchführung des Verfahrens.

Das Verfahren bildet z.B. Teil eines Herstellungsverfahrens, bei welchem ausgehend von den eine Anzahl von Inletts enthaltenden Druckbögen die Inletts laminiert und zu fertigen Ausweiskarten verarbeitet werden.

Es ist bisher üblich, daß das zu prägende Material in der Prägepresse erwärmt, geprägt und unter Prägedruck abgekühlt wird. Eine solche Verfahrensweise erfordert eine relativ hohe Verweilzeit in der Prägepresse und eignet sich nicht für einen kontinuierlichen Betrieb mit hoher Arbeitsgeschwindigkeit.

Aufgabe der Erfindung ist es, das eingangs genannte Verfahren so auszugestalten, daß es einen kontinuierlichen Arbeitsablauf mit hoher Arbeitsgeschwindigkeit und zugleich eine zuverlässige Prägung bei schonendster Behandlung der Werkstücke ermöglicht.

Die Lösung dieser Aufgabe besteht darin, daß die Werkstücke schrittweise zunächst einer Heizstation zugeführt und auf eine über der Prägetemperatur liegende Temperatur erhitzt, anschließend in eine Prägestation übergeben und mit unter Prägetemperatur gehaltenen Prägewerkzeugen geprägt und gekühlt und schließlich in einer Kühlstation weiter abgekühlt werden.

Durch die Aufteilung der den Prägevorgang betreffenden Einwirkungen auf unterschiedliche Stationen wird eine hohe Arbeitsgeschwindigkeit ermöglicht. Die Beheizung in der Heizstation erfolgt auf eine Temperatur, die so hoch liegt, daß die auf dem Transportweg zwischen Heizeinrichtung und Prägepresse erfolgende Abkühlung die Werkstücktemperatur nicht unter die für die Prägung erwünschte Temperatur absinken läßt.

Zur Durchführung des Verfahrens dient erfindungsgemäß eine Vorrichtung mit einem eine Prägepresse durchquerenden Werkstücktransportsystem und einer Heizeinrichtung für die Werkstücke, die derart ausgebildet ist, daß das Werkstücktransportsystem als Taktfördereinrichtung ausgebildet ist und daß die Heizeinrichtung einen Taktschritt vor der Prägepresse angeordnet ist, wobei vorzugsweise der Prägepresse eine Kühlstation nachgeschaltet ist.

Eine vorteilhafte Ausgestaltung dieser Vorrichtung besteht darin, daß die Heizeinrichtung zwei weitge hende druckfrei am Werkstück anlegbare Heizbacken umfaßt. Dadurch wird einerseits eine intensive Beheizung, andererseits aber eine sehr schonende Behandlung des Werkstücks erreicht.

Eine weitere zweckmäßige Ausgestaltung besteht darin, daß die Prägepresse zwei beheizbare, unter hohem Druck gegen das Werkstück preßbare Prägebacken umfaßt. Hierdurch wird sichergestellt, daß die Temperatur des Werkstücks zu Beginn des Prägevorgangs nicht schockartig abnimmt, jedoch bei Aufrechterhaltung des Prägedrucks bis auf eine Temperatur absinken kann, bei der die Prägung stabil bleibt.

Eine besonders zweckmäßige Ausbildung ist es, daß die Taktfördereinrichtung einen der Heizeinrichtung vorgeschalteten, auf eine Markierung des Werkstücks ansprechenden Sensor, sowie eine von einem Schrittmotor antreibbare Vorschubeinheit umfaßt, die geeignet ist, das Werkstück nach dem Ansprechen des Sensors mit einem Festschritt in die Heizeinrichtung, mit einem weiteren Festschritt in die Prägepressse und nach dem Prägen aus der Prägepresse weiterzubefördern.

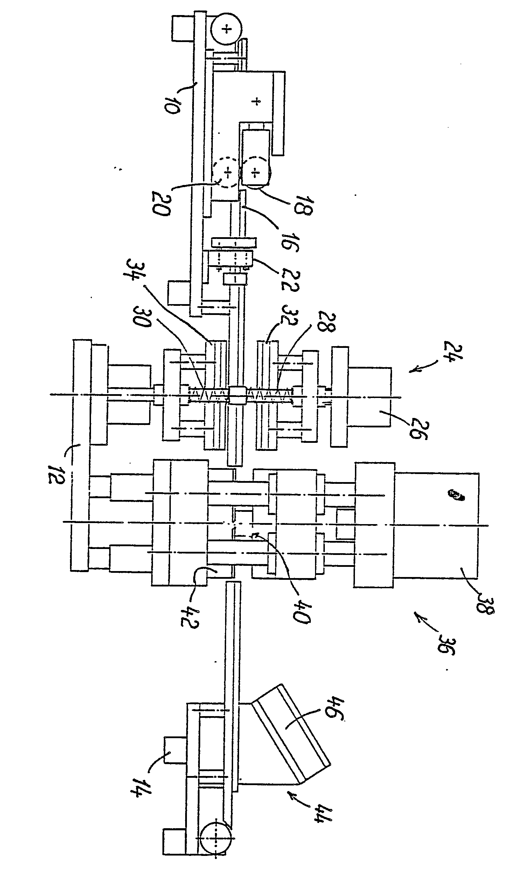

Anhand der nun folgenden Beschreibung eines in der Zeichnung dargestellten Ausführungsbeispiels der zur Durchführung des erfindungsgemäßen Verfahrens dienenden Vorrichtung wird die Erfindung näher erläutert.

Die Figur zeigt schematisch einen Teil einer Anlage zur Herstellung von laminierten Ausweiskarten, wobei die einzelnen Komponenten auf Konsolen 10, 12 und 14 angeordnet sind.

Auf der Konsole 10 befindet sich ein Führungstisch 16 für die von vorangehenden Arbeitsstationen angelie ferten Werkstücke, wobei die Werkstücke durch einen Schrittmotor mittels Förderwalzen 18 und 20 bewegbar sind, von denen die obere Walze 18 abhebbar ist. Eine in Förderrichtung verstellbare Lichtschranke 22 stellt die Ankunft eines Werkstücks fest und veranlaßt den taktweisen Transport der Werkstücke durch die gezeigte Vorrichtung.

Zunächst wird das von der Lichtschranke 22 ermittelte Werkstück um einen vorgegebenen festen Schritt in eine Heizstation 24 bewegt, wo durch einen pneumatischen Zylinder 26 zwei durch Federn 28 und 30 in ihre Ruhestellung überführte Heizbalken 32 und 34 gegen das Werkstück gelegt werden, ohne daß ein wesentlicher Druck ausgeübt wird. Die Verweilzeit und die Bezeizung ist so ausgelegt, daß die Werkstücktemperatur auf einen Wert ansteigt, der sicherstellt, daß unter Berücksichtigung der Abkühlung bei der anschließenden Übergabe des Werkstücks an eine Prägepresse 36, das Werkstück die Prägepresse 36 der für das Prägen erwünschten Temperatur erreicht. Nach dem Beheizen wird das Werkstück in einem weiteren Festschritt von der Heizstation 24 an die Prägepresse 36 übergeben, wo zwei durch einen Hydraulikzylinder 38 betätigbare Prägebacken 40 und 42 die Prägung ausführen.

Nach dem öffnen der Prägebacken 40 und 42 wird das Werkstück einer Kühlstation 44 zugeführt, in der die Kühlung durch ein Gebläse 46 erfolgt. Von der Kühlstation 44 aus wird das Werkstück in beliebiger Weise weitertransportiert.

**Ansprüche**

1. Verfahren zum Prägen von Werkstücken in Form von mit Hüllfolien laminierten, blatt- oder kartenförmigen Inletts, insbesondere Ausweisen oder dergleichen Datenträgern, in einer beheizten Prägepresse, bei welchem die Werkstücke erwärmt, geprägt und anschließend gekühlt werden, *dadurch gekennzeichnet*, daß die Werkstücke schrittweise zunächst einer Heizstation zugeführt und auf eine über der Prägetemperatur liegende Temperatur erwärmt, anschließend in eine Prägestation übergeben und geprägt und schließlich in einer Kühlstation abgekühlt werden.

2. Vorrichtung zur Durchführung des Verfahrens nach Anspruch 1 mit einem eine Prägepresse durchquerenden Werkstücktransportsystem und einer Heizeinrichtung für die Werkstücke, *dadurch gekennzeichnet*, daß das Werkstücktransportsystem (16, 18, 20, 22) als Taktfördereinrichtung ausgebildet ist, daß die Heizeinrichtung (24) einen Taktschritt vor der Prägepresse (36) angeordnet und die Kühlstation (44) der Prägepresse (36) nachgeschaltet ist.

3. Vorrichtung nach Anspruch 2, *dadurch gekennzeichnet*, daß die Heizeinrichtung (24) zwei weitgehend druckfrei am Werkstück anlegbare Heizbacken (32, 34) umfaßt.

4. Vorrichtung nach einem der Ansprüche 2 bis 4, *dadurch gekennzeichnet*, daß die Kühlstation (44) ein Kühlgebläse (46) enthält.

5. Vorrichtung nach einem der Ansprüche 2 bis 5, *dadurch gekennzeichnet*, daß die Taktfördereinrichtung einen der Heizeinrichtung (24) vorgeschalteten, auf eine Markierung des Werkstücks ansprechenden Sensor (22) umfaßt, der geeignet ist, das Werkstück nach dem Ansprechen des Sensors (22) mit einem Festschritt in die Heizeinrichtung (24), mit einem weiteren Festschritt in die Prägepresse (36) und nach dem Prägen aus der Prägepresse (36) weiter zu befördern.